## Europäisches Patentamt
## European Patent Office
## Office européen des brevets

(19)

(11) Numéro de publication: **0 129 861**

**B1**

(12) **FASCICULE DE BREVET EUROPÉEN**

(45) Date de publication du fascicule du brevet:
20.05.87

(51) Int. Cl.⁴: **E 21 B 4/00,** F 16 J 15/34, F 16 C 17/06

(21) Numéro de dépôt: **84107147.5**

(22) Date de dépôt: **22.06.84**

(54) **Dispositif à anneau de frottement oscillant pour l'appui axial d'un arbre.**

(30) Priorité: **27.06.83 FR 8310569**
**03.08.83 FR 8312808**

(43) Date de publication de la demande:
**02.01.85 Bulletin 85/1**

(45) Mention de la délivrance du brevet:
**20.05.87 Bulletin 87/21**

(84) Etats contractants désignés:
**BE DE FR GB NL**

(56) Documents cité:
**EP-A-0 026 100**
**FR-A-1 262 511**
**FR-A-1 402 270**
**GB-A-2 082 267**

(73) Titulaire: **ALSTHOM, 38, avenue Kléber, F-75784 Paris Cédex 16 (FR)**

(72) Inventeur: **Obrecht, Georges, "Le Canton" - G.15, F-38800 Pont de Claix (FR)**

(74) Mandataire: **Weinmiller, Jürgen, Lennéstrasse 9 Postfach 24, D-8133 Feldafing (DE)**

LIBER, STOCKHOLM 1987

## Description

L'invention concerne un dispositif à anneau de frottement oscillant pour l'appui axial d'un arbre. Ce dispositif comporte les éléments connus suivants:

- un ensemble de pièces tournantes entraînées en rotation par un arbre tournant autour d'un axe par rapport à un corps externe, la direction de cet axe étant une direction axiale, cet ensemble étant propre à transmettre une poussée axiale à cet arbre.

- et un ensemble de pièces non tournantes reliées à ce corps externe de manière à empêcher leur rotation autour de cet axe et à pouvoir transmettre une poussée axiale à ce corps, ces deux ensembles coopérant l'un avec l'autre pour empêcher un déplacement axial important dudit arbre dans ledit corps tout en permettant sa rotation, et constituant l'un un premier ensemble et l'autre un deuxième ensemble,

- le premier et le deuxième ensembles comportant chacun au moins un anneau de frottement muni d'au moins une surface de frottement plane selon un plan perpendiculaire à l'axe de l'arbre, cette surface présentant la forme d'une couronne circulaire coaxiale à cet arbre, étant constituée d'un matériau dur, et frottant contre une surface de frottement d'un anneau de frottement correspondant de l'autre ensemble, chaque anneau de frottement du deuxième ensemble portant une surface de frottement sur une seule de ses faces axialement extrêmes, cette face étant une face arrière,

- le deuxième ensemble comportant un élément d'appui élastique poussant l'anneau de frottement de cet ensemble dans une direction axiale vers l'avant pour l'appuyer de manière permanente contre l'anneau de frottement du premier ensemble, tout en permettant un petit coulissement axial de ces anneaux.

- et une armature pour servir d'appui arrière à cet élément d'appui,

- des moyens étant prévus pour empêcher la rotation de l'anneau de frottement du deuxième ensemble par rapport à cette armature autour dudit axe et pour guider le déplacement axial de cet anneau.

Le dispositif selon l'invention peut notamment s'appliquer dans le cas où l'arbre est celui de la turbine d'un moteur souterrain de forage, le corps externe étant le corps tubulaire fixe de cette turbine. Ledit premier ensemble comporte alors une succession axiale d'anneaux de frottement pouvant présenter chacun une surface de frottement sur chacune de ses deux faces et pouvant coopérer chacun avec deux anneaux de frottement du deuxième ensemble maintenus élastiquement chacun sur une armature distincte.

Un tel moteur associé à un outil convenable est souvent appelé "turboforeuse", et on sait que les turboforeuses ainsi constituées doivent être équipées avec des butées transmettant des efforts longitudinaux considérables entre l'arbre tournant et le corps externe. Les anneaux de frottement sont fabriqués en acier et les surfaces de frottement sont traitées de façon à présenter une dureté convenable, ainsi qu'un faible coefficient de frottement. Elles sont par exemple constituées de carbure de tungstène, de concrétions diamantées ou d'alliages métalliques à haute dureté. La présence des éléments d'appui axial élastique permet notamment de répartir les efforts entre les divers anneaux de frottement ainsi que d'amortir les vibrations et les chocs axiaux.

La fabrication d'un anneau de frottement monobloc rigide est plus simple que celle de la pluralité de plots de frottement indépendants que l'on a parfois utilisée pour jouer le même rôle dans le deuxième ensemble.

Un dispositif connu comportant les éléments précédemment mentionnés est décrit dans le document de brevet français FR-A-2 157 206 (Alsthom) ainsi que dans le document de brevet américain correspondant US-A 3 858 668 (Jean Bell), et il s'applique dans le cas indiqué ci-dessus.

Dans ce dispositif connu les anneaux de frottement du premier ensemble, c'est-à-dire ceux qui sont entraînés en rotation par l'arbre, ont leur face arrière, c'est-à-dire celle qui est opposée à la surface de frottement, portée par une couche d'un élastomère qui constitue ledit élément de poussée axiale. Leur rotation par rapport à l'arbre est empêchée par adhérence sur cette couche ou clavetage sur l'arbre, tout déplacement axial se faisant avec un frottement important.

Ce dispositif a permis d'augmenter la durée de service des turboforeuses, mais il est apparu que l'usure des surfaces de frottement limitait cette durée de manière génante. Cette usure est fortement accrue lorsque le milieu ambiant est constitué par une boue de forage charriant des particules abrasives.

La présente invention a pour but la réalisation d'un dispositif à anneaux de frottement oscillant permettant l'appui axial élastique d'un arbre et présentant une durée de service accrue, notamment en présence de boue de forage, tout en restant apte à transmettre des forces axiales importantes, et tout en restant de fabrication simple.

Le dispositif objet de l'invention comporte les éléments connus précédemment mentionnés et il est caractérisé par le fait que le deuxième ensemble comporte en outre une douille de guidage mobile par rapport à ladite armature, cette douille étant coaxiale audit arbre et portant rigidement l'anneau de frottement de cet ensemble.

- et une douille de guidage fixe par rapport à l'armature, cette douille fixe étant coaxiale et axialement coextensive à cette douille mobile, un jeu radial étant prévu entre ces deux douilles pour autoriser une petite inclinaison périodique de la douille mobile autour d'un axe d'inclinaison qui est perpendiculaire à l'axe de l'arbre, rencontre celui-ci dans l'étendue axiale de ces douilles et peut tourner autour de celui-ci, une telle inclinaison périodique pouvant résulter d'une inclinaison parasite qui affecte éventuellement la surface de l'anneau de frottement du premier ensemble, qui est transmise à celui du deuxième ensemble en raison de l'appui axial permanent des deux anneaux de frottement l'un contre l'autre, et qui prend un caractère variable et périodique pour l'anneau du deuxième ensemble en raison de la rotation des anneaux l'un par rapport à l'autre autour de l'axe de l'arbre.

- des paires de logements étant formées chacune par deux logements mobile et fixe creusés face à face dans les surfaces en regard de la douille mobile et de la douille fixe, respectivement, l'un au moins des logements de chaque paire étant une rainure s'étendant axialement.

- une bille étant disposée dans chacune de ces paires de logements avec un jeu suffisant pour permettre un coulissement axial aisé de la douille mobile par roulement des billes sur la paroi de cette rainure, ce jeu étant en même temps suffisamment petit pour éviter un jeu angulaire de la douille mobile par rotation autour de l'axe de l'arbre, de manière à constituer lesdits moyens pour empêcher la rotation de l'anneau de frottement du deuxième ensemble tout en facilitant non seulement ledit petit coulissement axial de cet anneau mais aussi ladite inclinaison périodique.

- un moyen de centrage des billes étant prévu pour que ces billes se disposent sur un cercle coaxial aux douilles mobile et fixe lorsque celle-ci sont coaxiales, et permettent alors par leur roulement une inclinaison de la douille mobile autour de n'importe quel dit axe d'inclinaison.

Chaque douille de guidage pourrait évidemment présenter diverses formes, par exemple, celle d'une cage d'écureuil dont les barreaux s'étendraient axialement et porteraient les rainures et seraient solidarisés les uns des autres par un anneau. Cependant pour faciliter la fabrication, la douille mobile et le moyen de poussée élastique sont de préférence sensiblement de révolution autour de l'axe de l'arbre et il en est de même de la douille fixe.

De plus, de préférence, la douille fixe entoure la douille mobile, l'armature étant solidaire du corps externe, de manière à faciliter le montage du dispositif autour de l'arbre avant la mise en place autour de ce corps externe.

La réalisation du dispositif selon l'invention résulte essentiellement, comme déjà indiqué, du désir de diminuer l'usure des anneaux de frottement. Il est apparu que cette usure résultait en partie du fait que les deux surfaces de frottement qui coopèrent n'étaient pas exactement coplanaires et que le contact entre elles ne se faisait donc qu'en certains points.

Il semble que l'usure soit alors accrue d'une part en raison d'une répartition hétérogène des efforts d'appui, d'autre part en raison de l'introduction exagérée de fines particules abrasives entre ces surfaces là où elles ne sont pas en contact, dans le cas où le milieu ambiant est constitué par une boue de forage. Il convenait donc soit de donner à l'un des anneaux de frottement la possibilité de s'incliner facilement dans tous les sens à chaque tour de l'arbre pour rester en contact par toute sa surface avec l'autre anneau si celui-ci était affecté d'une inclinaison accidentelle même petite, soit d'éviter toute inclinaison accidentelle sensible de cet autre anneau. Or, d'une part, il est difficile de réaliser l'assemblage, d'une turboforeuse par exemple, de manière à éviter toute inclinaison sensible. Et, d'autre part, même lorsqu'un tel assemblage presque parfait a été réalisé, au prix d'une augmentation sensible du coût de fabrication, une inclinaison dommageable peut apparaitre en service en raison notamment des contraintes de flexion auxquelles sont soumis des corps externes et des arbres internes tels que ceux d'une turboforeuse. On sait en effet que les puits de forage sont parfois incurvés volontairement ou non. Il est donc apparu nécessaire aux inventeurs de prévoir une possibilité d'inclinaison périodique d'un des anneaux de frottement. On peut remarquer que le dispositif connu du brevet Bell précédemment mentionné donne une telle possibilité. Mais il est conçu pour permettre essentiellement un petit coulissement axial, sans oscillation, sous l'action d'une force importante et il semble que. par suite de la raideur de l'élastomère utilisé ou par suite de frottements metal sur métal au niveau du guidage, l'inclinaison ne se fasse pas de manière suffisamment aisée. Il semble difficile d'éviter cette conséquence nuisible en diminuant cette raideur ou ces frottements car il est d'autre part nécessaire, pour éviter d'autres phénomènes conduisant eux aussi à une usure excessive, que les anneaux de frottement n'aient aucun jeu angulaire sensible en rotation autour de l'axe de l'arbre, par rapport à l'ensemble auquel chacun appartient. De tels jeux seraient dommageables pour les raisons suivantes: risques d'accoups de couple sur les dispositifs d'arrêt en rotation, ruptures des organes d'arrêt.

On sait par ailleurs que des glissières à billes permettent un coulissement axial aisé d'un arbre dans une douille tout en évitant tout jeu angulaire sensible si les billes sont guidées dans des rainures en regard. Mais ces glissières sont considérées comme interdisant toute inclinaison de l'arbre dans la douille. De telles glissières connues sont décrites dans les documents de brevet FR-A- 2 258 104 (Magnétic Seal) et GB-A- 2 073 285 (Zahnradfabrik).

Il a été trouvé, selon la présente invention, qu'un système apparenté à une glissière à billes pouvait non seulement autoriser, mais encore faciliter de telles inclinaisons, ceci en l'absence de tout jeu anormal. Cette facilité d'inclinaison en présence d'efforts axiaux et circonférentiels importants tient notamment au fait que, au niveau de chaque bille toute inclinaison par rotation autour d'un axe d'inclinaison particulier se traduit en partie par un déplacement axial, de sens et d'amplitudes divers selon la paire de rainures considérée, et qu'un tel déplacement est facilité par le roulement d'une bille dans les rainures.

A l'aide des figures schématiques ci-jointes on va décrire ci-après, à titre non limitatif, comment l'invention peut être mise en oeuvre. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

La figure 1 représente une demie vue d'un premier dispositifs selon l'invention en coupe par un plan axial I-I de la figure 2.

La figure 2 représente une demie vue de ce dispositif en coupe par un plan transversal II-II de la figure 1.

La figure 3 représente un détail III de la figure 2 à échelle agrandie.

La figure 4 représente une demi vue d'un deuxième dispositif selon l'invention en coupe par un plan axial IV-IV de la figure 5.

La figure 5 représente une demi vue de ce dispositif en coupe par un plan transversal V-V de la figure 4.

La figure 6 représente un détail VI de la figure 5 à échelle agrandie.

Le premier dispositif décrit à titre d'exemple comporte un ensemble de pièces tournantes entraînées en rotation par un arbre 2 tournant autour d'un axe 22 par rapport à un corps externe 13, et un ensemble de pièces non tournantes reliées à ce corps externe de manière à empêcher leur rotation autour de cet axe et à pouvoir transmettre une poussée axiale à ce corps.

Le premier ensemble comporte plusieurs anneaux de frottement tel que 1 se succédant axialement et pouvant être munis chacun de deux surfaces de frottement opposées dont une seule est représentée et qui frottent chacune contre l'unique surface de frottement d'un anneau de frottement tel que 6 du deuxième ensemble. Ce dernier comporte en outre un élément d'appui élastique 17 poussant une face arrière de l'anneau de frottement 6 de cet ensemble dans une direction axiale vers l'avant pour l'appuyer de manière permanente contre l'anneau de trottement 1 du premier ensemble, tout en permettant un petit coulissement axial de ces anneaux, et une armature 12 pour servir d'appui arrière à cet élément de poussée. Selon l'invention le deuxième ensemble comporte encore une douille de guidage 28 mobile par rapport à l'armature 12, cette douille étant coaxiale à l'arbre 2 et portant rigidement l'anneau de frottement 6 de cet ensemble, et une douille de guidage 33 fixe par rapport à l'armature 12. Des rainures mobiles 30 et fixes 32 s'étendent axialement et sont creusées face à face dans les faces en regard de la douille mobile et de la douille fixe, respectivement. Une bille 31 est disposée dans chaque paire de rainures se faisant face.

Ces billes 31 sont disposées avec un jeu suffisant pour permettre un coulissement axial aisé de la douille mobile par roulement des billes 31 sur les parois de ces rainures 30. Quoique ce jeu soit en même temps suffisamment petit pour éviter un jeu angulaire de la douille mobile par rotation autour de l'axe 22 de l'arbre 2, il est apparu qu'il permettait à la douille mobile d'effectuer aisément l'inclinaison périodique précédemment mentionnée.

Bien entendu la raideur de l'élément d'appui axial est choisie suffisamment faible pour permettre cette inclinaison aisée, par déformation variable le long de son périmètre. Elle est, dans l'exemple décrit choisie plus faible que s'il agissait seulement d'encaisser les déplacements axiaux prévisibles. Cet élément est par exemple constitué par une rondelle d'acier tronconique du type "Belleville".

Dans cet exemple l'arbre 2 est celui de la turbine d'un moteur souterrain de forage, le corps externe 13 étant le corps tubulaire de cette turbine, l'armature 12 solidaire du corps externe 13 présentant la forme d'une plaque annulaire percée de lumières 23 pour le passage axial d'une boue de forage qui fournit l'énergie motrice à cette turbine.

Quoique les anneaux de frottement soient de préférence réalisés sous la forme de pièces rapportées, il est clair qu'ils pourraient l'être aussi sous la forme de parties d'organes monobloc plus étendus incluant l'une par exemple l'arbre 2 et l'autre par exemple la douille mobile 28.

On adopte de plus de préférence et selon les circonstances, les dispositions suivantes:

Les rainures 30 comportent des butées d'extrémité facilitant le positionnement des billes 31 au montage, et empêchant leur sortie. L'angle A d'inclinaison périodique exprimé en radians imposé à l'anneau 6 par l'inclinaison parasite maximale prévisible de l'anneau de frottement 1, doit ne pas être trop grand. Les anneaux de frottement sont fabriqués et montés pour que cet angle soit inférieur à 1/100 de radian. Une telle valeur est facile à obtenir. D'autre part, dans le cas d'une turboforeuse de type habituel la courbure éventuelle du puits ne risque que très exceptionnellement d'amener cet angle au-dessus de cette valeur.

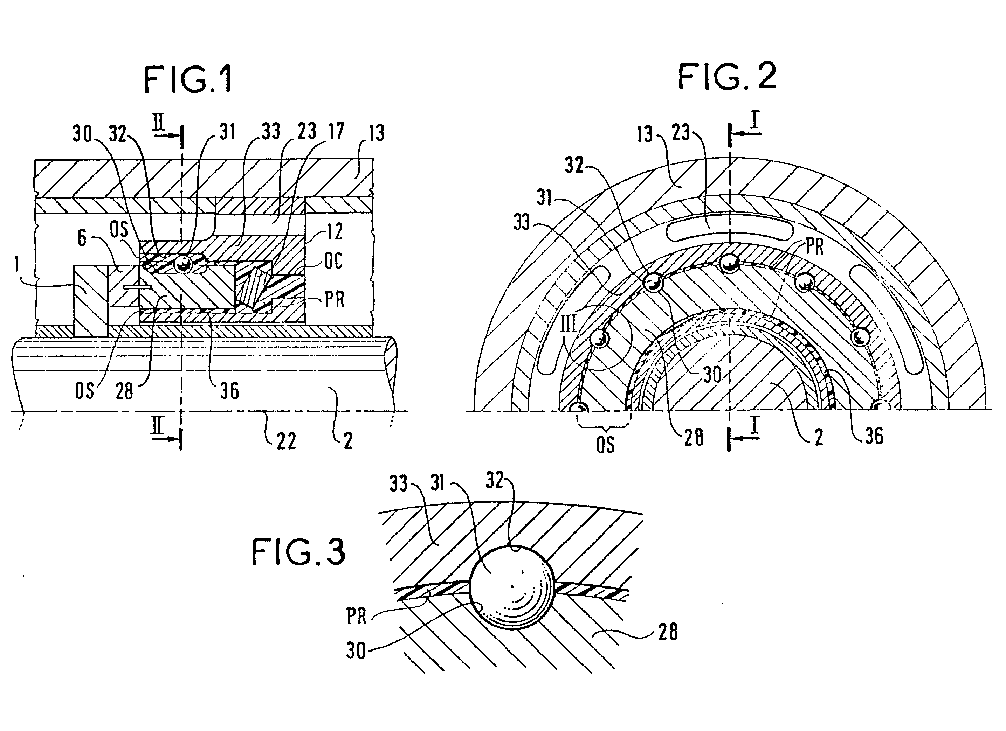

Conformément aux figures 2 et 3 les rainures 30 ont une section semi-circulaire.

La distance R du centre de la bille 31 à l'axe 22 de l'arbre 2 est fonction de la dimension nominale du dispositif et peut être comprise entre 15 et 200 mm, le jeu radial de la bille dans les rainures étant compris entre 0,05 mm et 0,2 mm et son jeu circonférentiel entre 0,05 mm et 0,2 mm en l'absence d'inclinaison et d'effort.

Le ressort 17 est comprimé entre la face arrière de la douille mobile 28 et l'armature 12.

Le déplacement des billes 31 est limitée par deux butées avant et arrière dans les rainures mobiles 30. Ceci permet d'introduire les billes 31 abord radialement dans les rainures mobiles 30 pendant le montage du dispositif lorsque la douille mobile 28 n'est encore que partiellement engagée axialement dans la douille fixe 33 à partir de l'avant de cette dernière, puis de faire glisser ces billes 31 axialement vers l'arrière dans les rainures fixes 32 et mobiles 30 à la fois jusqu'au fond de la rainure mobil 30, puis de pousser la douille mobilet 28 axialement vers l'arrière jusqu'à repousser le ressort 17 jusqu'au contact de l'armature 12, ce qui correspond à la position de service de l'ensemble lorsque l'effort axial est nul.

Un produit de remplissage PR élastique et mou est utilisé d'une part pour constituer le moyen de centrage précédemment mentionné et qui assure le centrage des billes 31 par rappel élastique, et d'autre part pour protéger le système mécanique comportant ces billes 31 contre le milieu agressif extérieur.

Pour permettre les déformations de ce produit des ouvertures de compensation OC sont par ailleurs percées à l'arrière de la douille fixe 33.

Par exemple après l'introduction des billes 31, le volume intérieur à la douille de guidage 33 est rempli d'un liquide qui est ensuite évacué et qui laisse, sur les parois de ce volume, un revêtement d'adhérence. Ce liquide est bien entendu adapté aux matériaux en présence.

Il peut être également déposé par application préalable par pulvérisation ou au pinceau, sur les pièces constitutives du mécanisme afin de permettre un séchage adéquat.

On procède ensuite à l'opération de remplissage précédemment mentionnée. Pour cela les ouvertures de compensation OC sont obturées, l'axe 22 est disposé verticalement avec l'ouverture de sortie en haut et les billes 31 sont amenées au contact du fond de la rainure 30 par gravité, la douille mobile étant alors au point haut de sa course, au simple contact de la rondelle 17.

Le matériel de départ liquide et très fluide est versé lentement dans l'ouverture de sortie OS jusqu'à remplissage. Des opérations de mise sous vide et recompression atmosphèrique permettent l'élimination de bulles dans le produit.

La polymérisation dudit produit de remplissage élastique se fait ensuite à l'ambiante ou à une température plus élevée permettant de raccourcir la durée de l'opération; ce produit est désigné sur les figures par la référence PR.

Il est a remarquer que l'expérience montre que, contrairement à ce qu'on aurait pu craindre. ce produit élastique ne gène pas le fonctionnement du système. Plus particulièrement il semble que, pendant le début du fonctionnement du système de nombreuses liaisons chimiques au sein de ce produit soient rompues dans les zones où les billes 31 roulent au contact des flancs des rainures 30 et 32, et où apparaissent des contraintes élevées, supérieures à 100 newtons par millimètre carré. Le produit de remplissage PR se comporte alors à peu près comme un liquide alors que, dans toutes les autres mones intérieures à l'enceinte de protection, il conserve sa cohérence interne.

Non seulement ce produit ne gène pas le fonctionnement du système précédemment décrit, mais il y contribue directement. Il constitue en effet un moyen de centrage qui tend à maintenir les billes 31 dans un même plan, c'est-à-dire dans des positions réparties sur un cercle coaxial aux douilles fixe 33 et mobile 28, lorsque celles-ci sont coaxiales. Or c'est à partir d'un tel ensemble de positions de départ que la douille mobile 28 peut s'incliner le plus facilement autour de n'importe quel axe d'inclinaison.

Par ailleurs, les variations du volume du produit PR intérieurs à l'enceinte 33 dûs aux mouvements des pièces fonctionnelles sont facilités ou autorisés par la déformation élastique du produit coulé dans les orifices de compensation OC, sans déchirement du produit ni décollement de celui-ci des parois métalliques.

De manière générale le produit de remplissage PR doit répondre, au moins de préférence, aux conditions suivantes:

- Excellente adhérence au métal (ou autre matériau) de l'enceinte de protection et de la pièce de liaison, si possible du même ordre sinon supérieure à sa résistance propre (cisaillement ou traction), soit des résistances comprises entre 3 et 30 N/mm² (traction).

- Le produit sera soumis du fait des mouvements à des contraintes de déchirement et d'allongement interne. Il devra s'accommoder de ces mouvements internes par une résistance importante au déchirement, comprise entre 20 et 200 N/cm, associée à un allongement très élevé (de 150 à 700%).

Le travail mécanique et interne du produit peut être générateur de chaleur que le produit doit aisément évacuer. La conductibilité thermique doit donc être aussi bonne que possible, par exemple 0,23 W/mK, et en tous cas supérieure à 0,1 W/mK.

Les mouvements du système mécanique génèrent des déformations du produit qui induisent donc des efforts contraires. Ces efforts seront aussi faibles que possible et peuvent être caractérisés par un module d'Young aussi faible que possible et pouvant se situer de préférence entre 0,5 et 20 N/mm².

Le produit peut être choisi dans la gamme des chlorosilanes ou des siloxanes spéciaux tels que ceux vendus par la Société Française Rhône Poulenc sous la marque de commerce Rhodorsil EVF.

Par contre des caoutchoucs naturels ou des élastomères artificiels tels que le polybutadiène qui pourraient convenir du point de vue comportement mécanique et adhérisation, sont plus délicats à la mise en oeuvre et pourraient nécessiter des outillages de mise en place très coûteux.

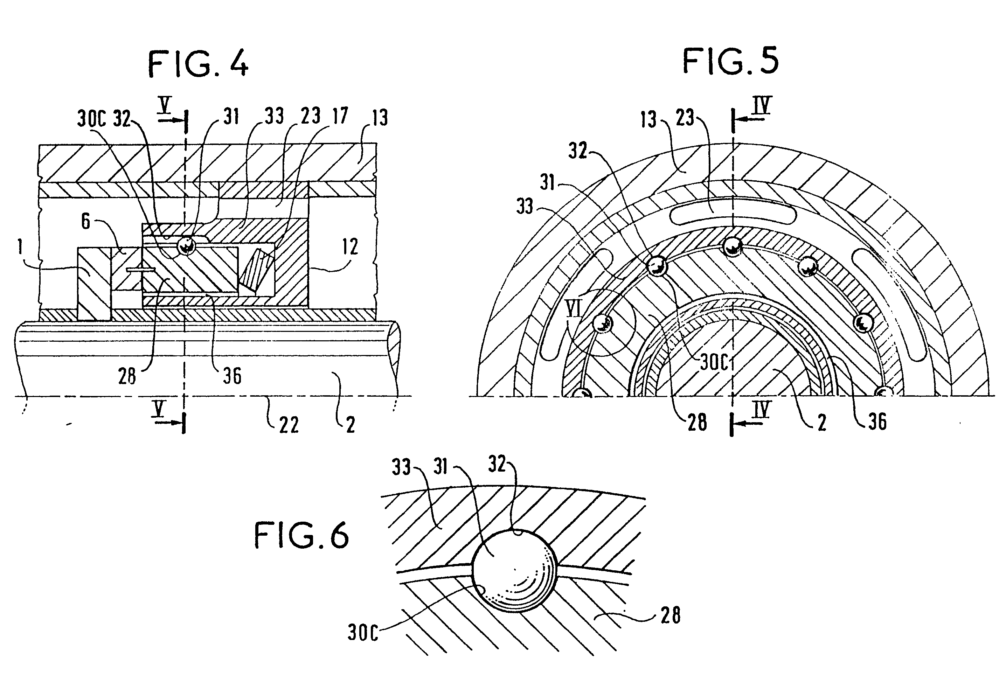

Dans un deuxième dispositif selon 1 invention représenté sur les figures 4, 5 et 6 on n'utilise pas de produit de remplissage pour rappel élastique des billes tel que PR. Le centrage des billes 31 est assuré par le fait que les rainures 30 sont remplacées par de simples cuvettes 30C sensiblement hémisphériques qui sont creusées dans la douille 28 et constituent lesdits moyens de centrage des billes. Ces dernières peuvent tourner dans ces cuvettes 30C tout en roulant dans les rainures 32.

On remarquera que dans l'hypothèse de l'absence de jeux et de déformation les mouvements d'inclinaison sont mathématiquement parlant impossible. En fait, des jeux mécaniques de l'ordre de 2 microns autorisent ce fonctionnement. Ces jeux sont nettement inférieurs à ceux habituellement pratiqués. Dans le cadre de l'invention un jeu de l'ordre de 0,02 à 0,1 mm est préféré.


**Revendications**

1/ Dispositif à anneau de frottement oscillant pour l'appui axial d'un arbre (2), comportant
- un ensemble de pièces tournantes entraînées en rotation par un arbre (2) tournant autour d'un axe (22) par rapport à un corps externe (13), la direction de cet axe (22) étant une direction axiale, cet ensemble étant propre à transmettre une poussée axiale à cet arbre (2),
- et un ensemble de pièces non tournantes reliées à ce corps externe (13) de manière à empêcher leur rotation autour de cet axe (22) et à pouvoir transmettre une poussée axiale à ce corps (13), ces deux ensembles coopérant l'un avec l'autre pour empêcher un déplacement axial important dudit arbre (2) dans ledit corps (13) tout en permettant sa rotation, et constituant l'un un premier ensemble et l'autre un deuxième ensemble,
- le premier et le deuxième ensembles comportant chacun un anneau de frottement (1) muni d'au moins une surface de frottement plane selon un plan perpendiculaire à l'axe (22) de l'arbre (2), cette surface présentant la forme d'une couronne circulaire coaxiale à cet arbre (2), étant constituée d'un matériau dur, et frottant contre une surface de frottement d'un anneau de frottement correspondant (6) de l'autre ensemble, l'anneau de frottement (6) du deuxième ensemble portant une surface de frottement sur une seule de ses faces axialement extrêmes, cette face étant une face avant et la face opposée étant une face arrière,
- le deuxième ensemble comportant un élément d appui élastique (17) poussant une face arrière de l'anneau de frottement (6) de cet ensemble dans une direction axiale vers l'avant pour l'appuyer de manière permanente contre l'anneau de frottement (1) du premier ensemble, tout en permettant un petit coulissement axial de ces anneaux,
- et une armature (12) pour servir d'appui arrière à cet élément d'appui (17),

- des moyens étant prévus pour empêcher la rotation de l'annau de frottement (6) du deuxième ensemble par rapport à cette armature (12) autour dudit axe (22) et pour guider le déplacement axial de cet anneau (6),
- ce dispositif étant caractérisé par le fait que le deuxième ensemble comporte en outre
- une douille de guidage (28) mobile par rapport à ladite armature (12), cette douille (28) étant coaxiale audit arbre (2) et portant rigidement l'anneau de frottement (6) de cet ensemble,
- et une douille de guidage (33) fixe par rapport à l'armature (12), cette doullie fixe (33) étant coaxiale et axialement coextensive à cette douille mobile (28), un jeu radial (36) étant prévu entre ces deux douilles (28, 33) pour autoriser une petite inclinaison de la douille mobile (28) autour d'un axe d'inclinaison qui est perpendiculaire à l'axe (22) de l'arbre (2), rencontre celui-ci dans l'étendue axiale de ces douilles (28, 33) et peut tourner autour de celui-ci, une telle inclinaison pouvant résulter notamment d'une inclinaison parasite éventuelle de la surface de l'anneau de frottement (1) du premier ensemble transmise à celui du deuxième ensemble, en raison de l'appui axial permanent des deux anneaux de frottement (1, 6) l'un contre l'autre.
- des paires de logements étant formées chacune par deux logements mobile (30) et fixe (32) creusés face à face dans les surfaces en regard de la douille mobile (28) et de la douille fixe (33), respectivement, l'un au moins des logements de chaque paire étant une rainure s'étendant axialement,
- une bille (31) étant disposés dans chacune de ces paires de logements (30, 32) avec un jeu suffisant pour permettre un coulissement axial aisé de la douille mobile (28) par roulement des billes (31) sur la paroi de cette rainure (30), ce jeu étant en même temps suffisamment petit pour éviter un jeu angulaire de la douille mobile (28) par rotation autour de l'axe de l'arbre (2), de manière à constituer lesdits moyens pour empêcher la rotation de l'anneau de frottement (6) du deuxième ensemble tout en facilitant non seulement ledit petit coulissement axial de cet anneau (6) mais aussi ladite inclinaison périodique.
- un moyen de centrage des billes (PR, 30C) étant prévu pour que ces billes (31) se disposent sur un cercle coaxial aux douilles mobile (28) et fixe (33) lorsque celles-ci sont coaxiales, et permettent alors par leur roulement une inclinaison de la douille mobile (28) autour de n'importe quel dit axe d'inclinaison.

2/ Dispositif selon la revendication 1, caractérisé par le fait que les deux logements de chaque dite paire sont constitués par deux rainures en regard (30, 32), ledit moyen de centrage étant constitué par un produit de remplissage élastique et mou (PR) emplissant ces rainures (30, 32).

3/ Dispositif selon la revendication 2, caractérisé par le fait que la rainure mobile (30) comporte deux butées d'extrémité empéchant un échappement axial des billes (31).

4/ Dispositif selon la revendication 2, caractérisé par le fait que ledit élément de poussée axiale (17) est comprimé entre une face arrière de cette douille mobile (28) et ladite armature (12),

- et la course des billes (31) est limitée par des butées avant et arrière dans les rainures mobiles (30), de manière à permettre d'introduire les billes (31) d'abord radialement dans les rainures mobiles (30) pendant le montage du dispositif lorsque la douille mobile (28) n'est encore que partiellement engagée axialement par rapport à la douille fixe (33) à partir de l'avant de cette dernière, puis de faire glisser ces billes (31) axialement vers l'arrière dans les rainures fixes (32) et mobiles (30) à la fois jusqu'à la butée arrière de la rainure mobile (30), puis de pousser la douille mobile (28) axialement vers l'arrière en poussant l'élément de poussée élastique (17) jusqu'à ce que cette douille (28) atteigne sa position de service, les billes (31) reposant alors sur cette butée arrière.

5/ Dispositif selon la revendication 4, caractérisé par le fait que la douille fixe (33) entoure la douille mobile (28), l'armature (12) étant solidaire du corps externe (13), de manière à faciliter le montage du dispositif autour de l'arbre (2) avant la mise en place du corps externe (13).

6/ Dispositif selon la revendication 4, caractérisé par le fait que la douille mobile (28) et le moyen de poussée élastique (17) sont sensiblement de révolution autour de l'axe (22) de l'arbre (2).

7/ Dispositif selon la revendication 1, caractérisé par le fait que l'arbre (2) est celui de la turbine d'un moteur souterrain de forage, le corps externe (13) étant le corps tubulaire de cette turbine l'armature (12) solidaire du corps externe (13) présentant la forme d'une plaque annulaire percée de lumières (23) pour le passage axial d'une boue de forage qui fournit l'énergie motrice à cette turbine.

8/ Dispositif selon la revendication 1 caractérisé par le fait que l'un des logements de chaque dite paire présente la forme d'une cuvette (30C) sensiblement hémisphérique dans laquelle ladite bille (31) peut tourner pour rouler dans la rainure (32) faisant face à cette cuvette (30C), l'ensemble desdites cuvettes étant réparti sur un cercle coaxial à la douille (28) dans laquelle ces cuvettes (30C) sont creusées de manière que chacune de ces cuvettes (30C) constitue ledit moyen de centrage.

9/ Dispositif selon la revendication 1, caractérisé par le fait que lesdits anneaux de frottement (1, 6) sont fabriqués et montés pour que l'angle d'inclinaison périodique imposé à l'anneau de frottement (6) du deuxième ensemble par l'inclinaison parasite maximale prévisible de l'anneau de frottement (1) du premier ensemble, soit inférieur à 1/100 de radian, de manière à limiter la diminution maximale qui affecte la distance radiale d'une extrémité d une rainure mobile (30) à la rainure fixe (32) qui lui fait face lorsque la douille mobile (28) s'incline de cet angle d'inclinaison.

**Claims**

1. An oscillating friction ring device for an axial thrust bearing of a shaft (2), comprising

- an assembly of rotary parts driven into rotation by a shaft (2) turning about an axis (22) with respect to an outer body (13), the direction of this axis (22) being an axial direction, this assembly being suitable for transmitting an axial thrust to that shaft (2),

- and an assembly of non-rotary parts connected to this outer body (13) so as to prevent their rotation about this axis (22) while enabling them to transmit an axial thrust to this body (13), these two assemblies cooperating with each other to prevent an important axial displacement of said shaft (2) in said body (13) while permitting its rotation, and constituting one a first assembly and the other a second assembly,

- the first and the second assembly each comprising a friction ring (1) supplied with at least one plane friction surface according to a plane which is perpendicular to the axis (22) of the shaft (2), this surface presenting the form of a circular crown which is coaxial to this shaft (2), being constituted of a hard material, and bearing against a friction surface of a corresponding friction ring (6) of the other assembly, the friction ring (6) of the second assembly presenting a friction surface on only one of its axial end faces, this face being a front face and the opposed face being a rear face,

- the second assembly comprising a resilient thrust element (17) pushing a rear face of the friction ring (6) of this assembly forward in an axial direction for making it bear in a permanent way against the friction ring (1) of the first assembly, while permitting a small axial sliding of these rings,

- and an armature (12) for serving as rear thrust of this thrust element (17),

- means being provided for preventing the rotation of the friction ring (6) of the second assembly with respect to this armature (12) about said axis (22) and for guiding the axial displacement of this ring (6),

- characterized in that the second assembly further comprises

- a guide sleeve (28) which is mobile with respect to said armature (12), this sleeve (28) being coaxial about said shaft (2) and carrying rigidly the friction ring (6) of this assembly,

- and a guide sleeve (33) fixed with respect to the armature (12), this fixed sleeve (33) being coaxial and axially coextensive to this mobile sleeve (28), a radial clearance (36) being provided between these two sleeves (28, 33) for allowing a small tilting of the mobile sleeve (28) about a tilt axis which is perpendicular to the axis (22) of the shaft (2), encounters the latter in the axial prolongation of these sleeves (28, 33) and is able to turn about the latter, such a tilt resulting in particular from a possible parasite tilt of the surface of the friction ring (1) of the first assembly transmitted to that of the second assembly, due to the permanent axial thrust of the two friction rings (1, 6) against each other,

- pairs of lodgings being formed each by two mobile (30) and fixed (32) lodgings, hollowed out in face to face relationship in the oppositely located surfaces of the mobile sleeve (28) and the fixed sleeve (33) respectively, one at least of the lodgings of each pair being an axially extending groove,

- a ball (31) being disposed in each of these pairs of lodgings (30, 32) with a sufficient clearance for permitting an easy axial sliding of the mobile sleeve (28) by rolling of the balls (31) on the wall of this groove (30), this clearance being at the same time small enough to avoid an angular movement of the mobile sleeve (28) by rotation about the axis of the shaft (2), so as to constitute said means for preventing the rotation of the friction ring (6) of the second assembly while facilitating not only said small axial sliding of this ring (6), but also said periodical tilt,

- a means for centering the balls (PR, 30C) being provided so that these balls (31) are disposed on a circle which is coaxial to the mobile (28) and fixed sleeve (33) when these are coaxial, and then permit by their rolling a tilting of the mobile sleeve (28) about any said tilt axis.

2. A device according to claim 1, characterized in that the two lodgings of each said pairs are constituted by two grooves facing each other, said centering means being constituted by a resilient and soft filling material (PR) filling these grooves (30, 32).

3. A device according to claim 2, characterized in that the mobile groove (30) comprises two end stops preventing an axial escape of the balls (31).

4. A device according to claim 2, characterized in that said element of axial thrust (17) is compressed between a back face of said mobile sleeve (28) and said armature (12),

- and the run of the balls (31) is limited by front and back stops in the mobile grooves (30), so as to permit to introduce the balls (31) first radially in the mobile grooves (30) when the device is assembled and when the mobile sleeve (28) is as yet only partially engaged axially with respect to the fixed sleeve (33) starting from the front of the latter, then to make the balls (31) glide axially to the rear side in the fixed (32) and mobile grooves (30) at the same time up to the rear stop of the mobile groove (30), then to push the mobile sleeve (28) axially to the rear by pushing the resilient thrust element (17) until this sleeve (28) reaches its service position, the balls (31) then resting on this rear stop.

5. A device according to claim 4, characterized in that the fixed sleeve (33) surrounds the mobile sleeve (28), the armature (12) being fixed to the outer body (13) so as to facilitate assembling of the device around the shaft (12) prior to the bringing into place of the outer body (13).

6. A device according to claim 4, characterized in that the mobile sleeve (28) and the resilient thrust means (17) are essentially of revolution about the axis (22) of the shaft (2).

7. A device according to claim 1, characterized in that the shaft (2) is that of the turbine of a downhole drill motor, the outer body (13) being the tubular body of this turbine, the armature (12) which is fixed to the outer body (13) presenting the shape of an annular plate having holes (23) for the axial passage of a drilling mud which supplies the motor power for the turbine.

8. A device according to claim 1, characterized in that one of the lodgings of said each pair has the form of an essentially hemispherical cup (30C) in which said ball (31) can turn and roll in the groove (32) facing this cup (30C), the unit of said cups being spaced out on a circle which is coaxial to the sleeve (28) in which said cups (30C) are hollowed out, so that each of these cups (30C) constitutes said centering means.

9. A device according to claim 1, characterized in that said friction rings (1, 6) are made and mounted so that the periodic tilt angle imposed on the friction ring (6) of the second assembly by the maximum expected parasite tilt of the friction ring (1) of the first assembly is smaller than 1/100 of a radian, so as to limit the maximum reduction which affects the radial distance between one end of a mobile groove (30) and the fixed groove (32) facing it when the mobile sleeve (28) tilts at said tilt angle.

**Patentansprüche**

1. Vorrichtung mit oszillierendem Reibungsring für ein Axiallager einer Welle (2), mit

- einer Einheit von drehenden Teilen, die von einer um eine Achse (22) in Richtung auf einen äußeren Körper (13) drehenden Welle (2) angetrieben werden, wobei die Richtung dieser Achse (22) eine axiale Richtung ist und die Einheit auf die Welle (2) einen axialen Schub ausüben kann,

- und einer Einheit von nicht drehenden Teilen, die mit dem äußeren Körper (13) verbunden sind, um ihre Drehung um diese Achse (22) zu verhindern und auf diesen Körper (13) einen axialen Schub übertragen zu können, wobei diese beiden Einheiten zusammenwirken, um eine große axiale Verschiebung der Welle (2) in dem Körper (13) zu vermeiden und trotzdem ihre Drehung zu ermöglichen, und eine erste bzw. eine zweite Einheit bilden,

- wobei die erste und die zweite Einheit je einen Reibungsring (1) mit mindestens einer ebenen Reibungsfläche gemäß einer zur Achse (22) der Welle (2) senkrechten Ebene aufweist und diese Fläche die Form einer zu dieser Welle (2) koaxialen kreisförmigen Krone aufweist, die aus einem harten Material besteht und gegen eine Reibungsfläche eines entsprechenden Reibungsrings (6) der anderen Einheit reibt, wobei der Reibungsring (6) der zweiten Einheit eine Reibungsfläche auf einer einzigen seiner axialen Endseiten aufweist, wobei diese Seite eine Vorderseite und die entgegengesetzte Seite eine Rückseite ist,

- wobei die zweite Einheit ein elastisches Stützelement (17) aufweist, das eine Rückseite des Reibungsrings (6) dieser Einheit in einer axialen Richtung nach vorne schiebt, um sie permanent gegen den Reibungsring (1) der ersten Einheit zu drücken und gleichzeitig ein geringfügiges axiales Gleiten dieser Ringe zu erlauben,

- einer Armatur (12), die als hintere Stütze dieses Stützelements (17) dient,

- wobei Mittel vorgesehen sind, um die Drehung des Reibungsrings (6) der zweiten Einheit in bezug auf diese Armatur um die Achse (22) zu verhindern und um das axiale Verschieben dieses Rings (6) zu führen,

- dadurch gekennzeichnet, daß die zweite Einheit weiter aufweist

- eine in bezug auf die Armatur (12) bewegliche Führungsbuchse (28), wobei diese Buchse (28) koaxial zur Welle (2) liegt und den Reibungsring (6) dieser Einheit starr trägt,

- und eine inbezug auf die Armatur (12) feste Führungsbuchse (33), wobei diese feste Buchse (33) koaxial und axial koextensiv zu dieser beweglichen Buchse (28) ist, wobei ein radiales Spiel (36) zwischen diesen beiden Buchsen (28, 33) vorgesehen ist, um eine geringfügige Neigung der beweglichen Buchse (28) um eine Neigungsachse zu erlauben, die senkrecht zur Achse (22) der Welle (2) liegt, diese in der axialen Verlängerung dieser Buchsen (28, 33) trifft und um diese drehen kann, wobei eine solche Neigung insbesondere aus einer eventuellen Fehlneigung der Oberfläche des Reibungsrings (1) der ersten Einheit entstehen kann, die auf den Reibungsring der zweiten Einheit aufgrund des permanenten axialen Aufstützens der beiden Reibungsringe (1, 6) gegeneinander übertragen wird,

- wobei Paare von Lagerschalen je von zwei beweglichen (30) und festen Vertiefungen (32) gebildet werden, die einander gegenüberliegend in den einander gegenüberliegenden Oberflächen der beweglichen Buchse (28) und der festen Buchse (33) angebracht sind, wobei mindestens eine der Vertiefungen jedes Paares eine Nut ist, die sich axial erstreckt,

- wobei eine Kugel (31) in jedem dieser Paare von Lagerschalen (30, 32) angeordnet ist mit einem ausreichenden Spiel, um ein leichtes axiales Gleiten der beweglichen Buchse (28) durch Rollen der Kugeln (31) auf der Wand dieser Nut (30) zu ermöglichen, wobei dieses Spiel gleichzeitig ausreichend klein ist, um ein Winkelspiel der beweglichen Buchse (28) durch Drehung um die Achse der Welle (2) zu vermeiden und so die Mittel zu bilden, die die Drehung des Reibungsrings (6) der zweiten Einheit verhindern und gleichzeitig nicht nur das geringfügige axiale Gleiten dieses Rings (6), sondern auch die periodische Neigung zu erleichtern,

- wobei ein Mittel zum Zentrieren der Kugeln (PR, 30C) vorgesehen ist, damit die Kugeln (31) sich auf einem zur beweglichen (28) und zur festen Buchse (33) koaxialen Kreis anordnen, wenn die Buchsen koaxial sind, und so durch ihr Rollen eine Neigung der beweglichen Buchse (28) um jede beliebige Neigungsachse ermöglichen.

2. Vorrichtung nach Anspruch 1, dadurch gekennzeichnet, daß die beiden Lagerschalen jedes Paares aus zwei einander gegenüberliegenden Nuten (30, 32) bestehen, wobei das Zentriermittel aus einem elastischen und weichen Füllprodukt (PR) besteht, das diese Nuten (30, 32) füllt.

3. Vorrichtung nach Anspruch 2, dadurch gekennzeichnet, daß die bewegliche Nut (30) zwei Endanschläge aufweist, die ein axiales Entkommen der Kugeln (31) verhindern.

4. Vorrichtung nach Anspruch 2, dadurch gekennzeichnet, daß das axiale Schubelement (17) zwischen einer Rückseite dieser beweglichen Buchse (28) und der Armatur (12) komprimiert wird,

- und daß der Laufweg der Kugeln (31) durch vordere und hintere Anschläge in den beweglichen Nuten (30) begrenzt ist, um es so zu ermöglichen, die Kugeln (31) zuerst während des Zusammenbaus der Vorrichtung, wenn die bewegliche Buchse (28) noch nur teilweise axial in bezug auf die feste Buchse (33) ausgehend von der Vorderseite dieser letzteren eingeführt ist, radial in die beweglichen Nuten (30) einzuführen, und dann diese Kugeln (31) axial nach hinten zugleich in den festen (32) und beweglichen Nuten (30) bis zum rückwärtigen Anschlag der beweglichen Nut (30) gleiten zu lassen, dann die bewegliche Buchse (28) axial nach hinten zu drücken, indem das elastische Schubelement (17) geschoben wird, bis diese Buchse (28) ihre Betriebsstellung erreicht, wobei die Kugeln (31) dann an diesem rückwärtigen Anschlag anliegen.

5. Vorrichtung nach Anspruch 4, dadurch gekennzeichnet, daß die feste Buchse (33) die bewegliche Buchse (28) umgibt, wobei die Armatur (12) fest mit dem äußeren Körper (13) verbunden ist, um den Aufbau der Vorrichtung um die Welle (2) herum vor dem Anbringen des äußeren Körpers zu erleichtern.

6. Vorrichtung nach Anspruch 4, dadurch gekennzeichnet, daß die bewegliche Buchse (28) und das elastische Schubmittel (17) im wesentlichen drehsymmetrisch um die Achse (22) der Welle (2) sind.

7. Vorrichtung nach Anspruch 1, dadurch gekennzeichnet, daß die Welle (2) die einer Turbine eines Tief-Bohrmotors ist, wobei der äußere Körper (13) der rohrförmige Körper dieser Turbine ist und die mit dem äußeren Körper (13) fest verbundene Armatur (12) die Form einer ringförmigen Platte aufweist, in die Öffnungen (23) zum axialen Durchtritt eines Bohrschlamms gebohrt sind, der dieser Turbine die Antriebsenergie liefert.

8. Vorrichtung nach Anspruch 1, dadurch gekennzeichnet, daß eine der Lagerschalen jedes Paars die Form einer im wesentlichen halbkugelförmigen Schale (30C) aufweist, in der die Kugel (31) drehen kann, um in der dieser Schale (30C) gegenüberliegenden Nut (32) zu rollen, wobei die Gesamtheit dieser Schalen auf einem zu der Buchse (28) koaxialen Kreis liegen, in der diese Schalen (30C) angebracht sind, so daß jede dieser Schalen (30C) das Zentriermittel bildet.

9. Vorrichtung nach Anspruch 1, dadurch gekennzeichnet, daß die Reibungsringe (1, 6) so hergestellt und angeordnet werden, daß der periodische Neigungswinkel, der dem Reibungsring (6) der zweiten Einheit durch die maximale vorhersehbare Fehlneigung des Reibungsrings der ersten Einheit aufgeprägt wird, geringer ist als 1/100 Radian, um so die maximale Verringerung zu begrenzen, die die radiale Entfernung von einem Ende einer beweglichen Nut (30) zur ihr gegenüberliegenden festen Nut (32) betrifft, wenn die bewegliche Nut (28) sich um diesen, Neigungswinkel neigt.

# FIG.1

# FIG.2

# FIG.3

0 129 861

FIG.5

FIG.4

FIG.6